# EUROPEAN PATENT APPLICATION

(11) **EP 4 670 902 A1**
(43) Date of publication of application: **31.12.2025**
(21) Application number: 25185239.8
(22) Date of filing: 25.06.2025
(51) Int. Cl.: B23K 35/26, B23K 1/08, B23K 3/06, C22C 12/00

(54) **SOLDER SUPPLYING METHOD**

(30) Priority: 30.06.2024 JP 2024105827
(71) Applicant: Senju Metal Industry Co., Ltd., Tokyo 120-8555 (JP)
(72) Inventor: SUGISAWA, Kota, Tokyo, 120-8555 (JP); MATSUFUJI, Takahiro, Tokyo, 120-8555 (JP); YOSHIKAWA, Shunsaku, Tokyo, 120-8555 (JP)
(74) Representative: Zimmermann & Partner Patentanwälte mbB

(57) **Abstract**

To provide a solder supplying method for maintaining the Bi content contained in a solder alloy in a solder bath at a predetermined amount even after soldering a large number of printed circuit boards with a Bi-containing solder alloy. A solder supplying method includes supplying an additionally supplied solder, which is Sn and/or a low-Bi solder alloy having a lower Bi content than a Bi-containing solder alloy, to a solder bath into which the Bi-containing solder alloy has been introduced, thereby adjusting the Bi content in the solder bath to the Bi content of the Bi-containing solder alloy when it has been initially introduced in the solder bath.

## Description

### Technical Field

The present invention relates to a method for supplying solder to a solder bath.

### Background Art

Electronic devices such as a TV, a video, a radio, a computer, a copying machine, and a communication device are used in which electronic components are mounted on a printed circuit board. The electronic components need to be firmly fixed onto the printed circuit board and have good electrical connection with the printed circuit board. Consequently, a solder alloy is used for connecting the electronic components and the printed circuit board.

In recent years, electronic components have been downsized, and the thermal load at the time of soldering has increased. Therefore, soldering at a low temperature is desired. When a soldering temperature becomes low, the load on the electronic components and the circuit board at the time of soldering can be reduced, and the environmental load can be reduced. To solder at a low temperature, a solder alloy having a low melting point may be used.

Examples of the solder alloy having a low melting point include Sn-Bi (58 mass%) and Sn-In (52 mass%) as disclosed in JIS Z 3282 (2017). The melting temperatures of these alloys are 139°C and 119°C, respectively, and both are alloy compositions representing low-melting point solders. In particular, the Sn-Bi (58 mass%) alloy is widely used as a low-cost solder alloy.

By the way, examples of a method of using the solder alloy include immersion and flowing. For immersion, solder is melted in a solder bath, and a printed circuit board is brought into contact with the molten solder to attach the solder to a soldered portion. For flowing, molten solder is jetted from a jet nozzle provided in a solder bath containing the molten solder to solder the printed circuit board.

As described above, each method brings the molten solder in the solder bath into contact with the printed circuit board. However, when soldering is performed on a printed circuit board including a Cu electrode or a Cu wiring by immersion or flowing, since a large number of printed circuit boards are brought into contact with molten solder in a solder bath, the Cu content in the molten solder increases, and problems such as an increase in melting point and poor soldering may occur.

Therefore, for example, Patent Document 1 proposes a method of additionally supplying a solder alloy having a low Cu content to a solder bath. In the invention described in the same patent document, since the solder alloy having a low Cu content is additionally supplied to the solder bath, the Cu content of the molten solder in the solder bath can be returned to a predetermined Cu content.

### Citation List

### Patent Document

Patent Document 1: Japanese Patent Publication No. 3312618

### Summary of Invention

### Technical Problem

However, the invention described in Patent Document 1 is a technique for adjusting the Cu content in the molten solder. For example, as described above, a solder alloy containing Bi as a main component, which is known as a low-melting point solder alloy, has a lower melting point and a lower content of Sn than a Cu-containing solder alloy. Therefore, when a solder alloy containing Bi as a main component is used in immersion or flowing, an elution amount of Cu into the molten solder is smaller than that of the Cu-containing solder alloy described in Patent Document 1, and the rate of increase in the elution amount is also considered to be slower. Therefore, in view of a maintenance cycle and other factors, it is not feasible to apply the technique described in Patent Document 1 when the solder alloy containing Bi as a main component is used in immersion or flowing.

Additionally, when an Sn-Bi solder alloy is used in immersion or flowing, there is a concern that a change in the Bi content may affect desired characteristics upon soldering a large number of printed boards. This is because, for example, as is clear from the equilibrium state diagram, there is a concern that the melting point increases and the solderability is impaired when the Bi content varies in the Sn-Bi eutectic solder alloy.

Therefore, an object of the present invention is to provide a solder supplying method for maintaining the Bi content contained in a solder alloy in a solder bath at a predetermined amount even after soldering a large number of circuit boards with a Bi-containing solder alloy.

### Solution to Problem

As a result of intensive studies on the cause of the change in the Bi content contained in the molten solder when printed circuit boards are soldered by immersion or flowing, the present inventors have found that it is because the molten solder in the solder bath comes into contact with a large amount of printed circuit boards to perform soldering. Along with this, the present inventors have found that when an Sn-Bi solder alloy is used in immersion or flowing, since soldering is continuously performed, Sn of the solder alloy in the solder bath is consumed, so that the Bi content relatively increases.

In immersion and flowing, the molten solder comes into contact with the circuit board at the time of soldering only for a short period, and the mass of Sn consumed for joining one printed circuit board is very small. However, even if the mass of Sn consumed for joining one printed circuit board is small, a larger number of print circuit boards is soldered in mass production. Therefore, the mass of Sn consumed from the molten solder in the solder bath eventually increases. Consequently, the mass of Sn contained in the molten solder is much reduced from the initial input composition. As described above, when the Sn-Bi solder alloy is used in immersion or flowing, the Bi content is relatively increased.

In immersion and flowing, since the molten solder in the solder bath adheres to the circuit board, the mass of the solder alloy in the solder bath is reduced when soldering is performed on a large number of circuit boards. Further, in the molten soldering, since the reaction between the solder alloy and oxygen generates dross, the mass of the solder in the solder bath decreases when the dross is removed. In immersion and flowing, soldering is performed by bringing a circuit board into contact with molten solder, and thus normal soldering cannot be performed unless the liquid level of the molten solder is within a predetermined range. That is, when the solder alloy in the solder bath adheres to the circuit board and the amount thereof is reduced upon soldering a large number of circuit boards, and the liquid level of the molten solder is lowered, the molten solder cannot be in contact with the circuit board flowing at a fixed position, causing soldering failure.

Therefore, a liquid level sensor that constantly monitors the liquid level of the molten solder is installed in the solder bath, and the liquid level sensor issues an alarm when the mass of the molten solder decreases and the liquid level of the molten solder drops. When this alarm is issued, an operator or an automatic supplying device supplies rod-like solder or wire-like solder to the solder bath to maintain a predetermined liquid level.

Generally, the Bi content is the same as the Bi content in the initial input composition in the Bi-containing solder alloy supplied to the solder bath when the liquid level of the molten solder drops. For example, when the Bi content is 58 mass%, a solder alloy in which the Bi content is 58 mass% would be supplied. Also, conventionally, in order to suppress deviation in the composition after the additional supply, the Bi-containing solder alloy having the initial input composition is introduced into the solder bath after all the solder alloy in the solder bath has been drawn out outside of the solder bath. Alternatively, about half the mass of the Bi-containing solder alloy in the solder bath is changed with the Bi-containing solder alloy having the initial input composition.

As described above, in the case of additionally supplying the solder alloy having the same composition as the initial input composition into the molten solder bath in which the Sn amount is reduced, it has been found from the above findings that the Bi content contained in the molten solder in the solder bath increases above a predetermined amount as the number of circuit boards to be soldered increases. Further, with an increase in the recovery amount of the used solder alloy drawn out of the solder bath, a problem such as an increase in environmental load, soldering process time and soldering cost has occurred.

As described above, for immersion and flowing, since a large number of circuit boards are brought into contact with the molten solder in the solder bath, Sn is consumed and the Bi content relatively increases. Therefore, the present inventors have completed the present invention by focusing on the fact that the above-described concern due to the increase in the Bi content can be solved if the relatively increased Bi content can be returned to the Bi content at the initial stage of input. The completed invention is as follows.
(1) A solder supplying method including supplying an additionally supplied solder, which is Sn and/or a low-Bi solder alloy having a lower Bi content than a Bi-containing solder alloy, to a solder bath into which the Bi-containing solder alloy has been introduced, thereby adjusting the Bi content in the solder bath to the Bi content of the Bi-containing solder alloy when it has been initially introduced in the solder bath.
(2) The solder supplying method according to (1) above,
   wherein the Bi-containing solder alloy and the additionally supplied solder each contain at least one of Ge, P, In, Zn, Mn, Cr, Co, Fe, Si, Al, Ti, Ag, Cu, Ni, Sb, and a rare earth element.
(3) The solder supplying method according to (1) or (2) above,
   wherein the Bi-containing solder alloy is an Sn-Bi solder alloy or an Sn-Bi-Ag solder alloy.
(4 and 5) The solder supplying method according to any one of (1) to (3) above,
   wherein the Bi-containing solder alloy initially introduced into the solder bath is introduced at predetermined time intervals or predetermined timing in a time region from introduction of the Bi-containing solder alloy into the solder bath first to immediately before supply of the additionally supplied solder.
(6 to 9) The solder supplying method according to any one of (1) to (5) above,
   wherein the additionally supplied solder is supplied based on a Bi content constituting a solder alloy in the solder bath immediately before the additionally supplied solder is supplied.
(10 to 13) The solder supplying method according to any one of (6) to (9) above,
   wherein the additionally supplied solder is supplied into the solder bath after a Bi-containing solder alloy having a mass substantially equal to a supplying amount of the additionally supplied solder is drawn out of the solder bath from the Bi-containing solder alloy in the solder bath.

### Description of Embodiments

The present invention will be described in greater detail below. In this description, "%" relating to the solder alloy composition refers to "mass%" unless otherwise specified.

### 1. Solder Supplying Method

A solder supplying method according to the present invention is a method of supplying solder to a solder bath introducing a Bi-containing solder alloy. The present invention is applied to soldering using a soldering device including a solder bath.

The capacity of the solder bath used in the solder supplying method according to the present invention may be any capacity as long as molten solder necessary for soldering the printed circuit board can be input, and may be, for example, several grams to several hundred kilograms.

The initial input composition of the solder alloy initially input in the solder bath is not particularly limited as long as it is a Bi-containing solder alloy, and examples thereof include an Sn-Bi solder alloy and an Sn-Bi-Ag solder alloy. In the present invention, unless otherwise specified, the "Bi-containing solder alloy" has an initial input composition that is initially input into the solder bath.

The Bi content in the Bi-containing solder alloy may be, for example, 10 to 60% and may be 30 to 60%. Specific examples of the Bi content in the Bi-containing solder alloy include 58%, 57%, 40%, 35%, and 30%.

The Bi-containing solder alloy used in the present invention may contain at least one of Ge, P, In, Zn, Mn, Cr, Co, Fe, Si, Al, Ti, Ag, Cu, Ni, Sb, and a rare earth element as random elements. The content of each element is preferably 5% or less in total of at least one of In, Sb, and Zn, and 1% or less in total of at least one of Ge, P, Mn, Cr, Co, Fe, Si, Al, Ti, and a rare earth element. In the present invention, the rare earth elements are 17 elements obtained by combining Sc and Y belonging to Group 3 elements in the periodic table and 15 elements of the lanthanum group corresponding to the atomic numbers 57 to 71.

Examples of the alloy composition of the Bi-containing solder alloy include Sn-57Bi-1Ag (melting temperature: 138-145°C), Sn-58Bi-0.5Sb-0.015Ni (melting temperature: 140-145°C), Sn-57Bi-0.4Ag (melting temperature: 138-141°C), Sn-40Bi-0.5Cu-0.03Ni (melting temperature: 139-174°C), and Sn-35Bi-0.5Cu-0.03Ni (melting temperature: 140-182°C). The melting point in parentheses represents a temperature range from the solidus temperature to the liquidus temperature.

Unavoidable impurities may be contained within a range in which the characteristics of the solder alloy having the initial input composition are not impaired. The melting temperature of the Bi-containing solder alloy may be 190°C or lower.

The additionally supplied solder additionally supplied to the solder bath is Sn and/or a low-Bi solder alloy having a lower Bi content than the Bi-containing solder alloy. Since the Bi-containing solder alloy in the solder bath consumes Sn by soldering the circuit board, the Bi content relatively increases. Therefore, it is necessary that the Bi content of the additionally supplied solder additionally supplied to adjust the Bi content of the solder alloy in the solder bath to the Bi content of the initial input composition is less than that of the Bi-containing solder alloy having the initial input composition.

The Bi content of the low-Bi solder alloy may be about 0 to 90% of the Bi content contained in the Bi-containing solder alloy, and may be changed according to the supplying time. A solder alloy not containing Bi may be used. The additionally supplied solder may contain unavoidable impurities within a range in which the characteristics of the Bi-containing solder alloy are not impaired. Further, the additionally supplied solder may contain the random elements described above, similarly to the Bi-containing solder alloy.

In the case of using the additionally supplied solder in which the Bi content of the additional supplying composition is slightly lower than the initial input composition, it may be necessary to increase the additional supplying amount in order to recover the Bi content of the initial input composition. Therefore, the composition of the additionally supplied solder can be randomly determined in consideration of the balance between the additional supplying amount and the Bi content of the additionally supplied solder. However, as described above, the Bi content of the additional supplying composition needs to be at least lower than the Bi content of the initial input composition.

In the present invention, the increased Bi content in the solder bath can be adjusted to the Bi content of the Bi-containing solder alloy having the initial input composition using the additionally supplied solder described above. This can be achieved because the Bi content of the additionally supplied solder is less than the Bi content of the initial input composition. Preferred embodiments will be described later.

As described above, it is necessary to periodically remove dross for soldering by means of immersion or flowing. Further, the larger the number of circuit boards to be soldered, the larger the amount of solder to be consumed for soldering. According to the present invention, the Bi-containing solder alloy initially introduced into the solder bath may be introduced at predetermined time intervals or predetermined timing in a time region from introduction of the Bi-containing solder alloy into the solder bath first to immediately before supply of the additionally supplied solder.

The predetermined timing is, for example, timing for removing dross. Further, the predetermined time refers to that, for example, when the number of soldered circuit boards per unit time is constant over a long time, the amount of molten solder in the solder bath decreases according to the soldering time. Under such circumstances, the additionally supplied solder may be supplied every predetermined time.

The timing of additionally supplying the additionally supplied solder may be when dropping, for example, by about 1 to 20 mm lower than the initial liquid level height at which the Bi-containing solder alloy is input into the solder bath, or alternatively, when the liquid level height may be dropped by 5 to 8 mm. Sn or the low-Bi solder alloy with the Bi content adjusted as described above may be supplied according to the liquid level height at the time of supply.

In the present invention, the other timing may be based on the content of Bi constituting the solder alloy in the solder bath immediately before the additionally supplied solder is supplied. For example, the additional supply may be performed when the increase rate of the Bi content in the solder bath immediately before the additional supply becomes 2% or more, or the additional supply may be performed when the increase rate of the Bi content in the solder bath becomes 2.4% or more. The increase rate can be calculated by [{(Bi content immediately before additional supply) - (Bi content of initial input composition)}/(Bi content of initial input composition)]×100 (%). The Bi content in the solder bath immediately before the additional supply may be obtained by, for example, ICP mass spectrometry.

In the present invention, the supplying amount of the additionally supplied solder can be obtained as follows. (Bi content of initial input composition) - (Bi content of additionally supplied solder) =X, and (Bi content immediately before additional supply) - (Bi content of initial input composition) =Y. With these features, (initial input amount)/{(X/Y) +1} will be acquired. For example, when the initial input amount is 420 kg, the Bi content of the initial input composition is 58 mass%, the Bi content of the additionally supplied solder is 0% (for example, Sn), and the Bi content immediately before the additional supply is 59.77 mass%, X=58 and Y=1.77, so that (the supplying amount of the additionally supplied solder) =420/{(58/1.77)+1} ≈ 12.44 kg.

In the present invention, the additional supplied solder having the additional supplying amount thus obtained is added to the solder bath. However as described above, when the Bi-containing solder alloy having the same composition as the initial input composition is regularly supplied, the solder amount in the solder bath is always almost full. In such a case, the molten solder having substantially the same mass as the additional supplying amount of the additionally supplied solder may be drawn out of the solder bath before the additionally supplied solder is supplied. When the Bi-containing solder alloy having the same composition as the initial input composition is not supplied on a regular basis, the Bi-containing solder alloy may be additionally supplied when the solder amount in the solder bath is reduced by the additional supplying amount. A decrease in the solder amount in the solder bath can be determined based on a change in the liquid level height of the molten solder in the solder bath.

The Bi content in the solder bath after the additionally supplied solder alloy is additionally supplied preferably has a small difference from the Bi content in the initial input composition of the Bi-containing solder alloy. For example, the ratio of the difference between the Bi content in the initial input composition and the Bi content after additional supply, [{(Bi content after additional supply) - (Bi content of initial input composition)}/(Bi content of initial input composition)]× 100 (%), may be within ±1.0% of the Bi content in the initial input composition, and is preferably within ±0.57%. By falling within this range, various properties of the initially input Bi-containing solder alloy are maintained.

In the present embodiment, the supplying method focusing on Bi has been described, but the present invention is also applied to an element whose content relatively increases due to soldering. In particular, the Ag content can be adjusted to the initial input composition by the same method as Bi content.

According to the present embodiment, when soldering using the Bi-containing solder alloy is performed by means of immersion or flowing, even if Sn is consumed from the molten solder in the solder bath and the Bi content increases, the Bi content in the solder bath can be made substantially the same as the Bi content of the initial input composition because the additionally supplied solder is Sn or a low-Bi solder alloy with the Bi content less than the initial input composition. Therefore, if the solder is additionally supplied to the solder bath by the solder supplying method of the present invention, it is possible to suppress deterioration of solderability, and thus, soldering defects will rarely occur. Additionally, it is possible to suppress the recovery amount of the used solder alloy drawn out of the solder bath, to reduce the environmental load, to shorten the soldering process time, and to suppress an increase in soldering cost.

### Examples

The present invention will be described based on the following examples, however, the present invention is not limited thereto.

### Example 1:

Using the flow soldering device (MTF-300) manufactured by SMIC, 420 kg of Sn-Bi solder alloy (Bi content is 58 mass%, and the balance is Sn and unavoidable impurities) having the initial input composition shown in Table 1 below was input into the solder bath. Thereafter, until additionally supplied solder was supplied, a Bi-containing solder alloy (Additional Supplying Composition 1) having the same composition as the initial input composition was continuously introduced into the solder bath every time the dross was removed. In this solder bath, soldering of a Cu-clad substrate (Cu width: 200 mm × 350 mm) was continuously performed by means of flowing.

After the Bi content in the solder bath reached 59.77 mass%, the supplying amount of the additionally supplied solder was determined using Sn (the balance being unavoidable impurities) as the additionally supplied solder, and found to be 12.44 kg. Only 12.44 kg of molten solder was drawn out from the solder bath, and 12.44 kg of Sn (the balance being unavoidable impurities) (Additional Supplying Composition 2) as an additionally supplied solder was introduced. The Bi content in the solder bath was measured by ICP analysis using an ICP mass spectrometer (ICP-MS) (RF power: 1600 W) manufactured by Agilent Technologies.

Then, the Bi content contained in the molten solder after the additionally supplied solder having the Additional Supplying Composition 2 was additionally supplied to the SnBi solder alloy in the solder bath was measured using the ICP mass spectrometer described above. As a result, the Bi content was 58.25 mass%, which was the component content close to the solder alloy of the initial input composition.

### Examples 2 to 4, and 7 to 10

Additional supply of solder was performed in the same manner as in Example 1 except that the initial input composition, the Additional Supplying Compositions 1 and 2, the additional supplying timing, and the additional supplying amount in Example 1 follow the conditions shown in Table 1. In all cases, as shown in Table 1, the component content was close to the solder alloy of the initial input composition.

### Examples 5, 6, 11, and 12

A Cu-clad substrate having Cu width: 70 mm × 100 mm was soldered using a small flow device (flow simulator manufactured by Malcom), and additional supply was performed under the conditions shown in Table 1, including the initial input amount, the initial input composition, the Additional Supplying Compositions 1 and 2, the additional supplying timing, and the additional supplying amount. In all cases, as shown in Table 1, the component content was close to the solder alloy of the initial input composition.

### Example 13

In Example 13, the Bi-containing solder alloy (Additional Supplying Composition 1) having the same composition as the initial input composition was not introduced into the solder bath, and soldering of a Cu-clad substrate (Cu width: 200 mm × 350 mm) was performed in the same manner as in Example 1 until the liquid level height of the molten solder in the solder bath decreased by 5 mm from the initial liquid level height. Thereafter, the additionally supplied solder (Additional Supplying Composition 2) was supplied until the liquid level height returned to the initial level height at the time of input.

### Comparative Example 1

In Example 1, the Additional Supplying Compositions 1 and 2 were set to the same composition as the initial input composition, and soldering of a Cu-clad substrate (Cu width: 200 mm × 350 mm) was performed in the same manner as in Example 1, and additional supply of solder was performed under the conditions shown in Table 1. As shown in Table 1, the Bi content was significantly increased as compared with the initial input composition.

The solder compositions in Table 1 all contain unavoidable impurities.

**[Table 1]**

| | Example 1 | Example 2 | Example 3 | Example 4 | Example 5 | Example 6 | Example 7 | Example 8 | Example 9 | Example 10 | Example 11 | Example 12 | Example 13 | Comparative Example 1 |
|---|---|---|---|---|---|---|---|---|---|---|---|---|---|---|
| Initial Input Amount (kg) | 420 | 420 | 420 | 420 | 12 | 12 | 420 | 420 | 420 | 420 | 12 | 12 | 420 | 420 |
| Initial Input Composition (Bi-containing Solder Alloy) (mass%) | Sn-58Bi | Sn-58Bi | Sn-58Bi | Sn-58Bi | Sn-58Bi | Sn-58Bi | Sn-57Bi-1Ag | Sn-57Bi-1Ag | Sn-57Bi-1Ag | Sn-57Bi-1Ag | Sn-57Bi-1Ag | Sn-57Bi-1Ag | Sn-58Bi | Sn-58Bi |
| Additional Supplying Composition 1 | Sn-58Bi | Sn-58Bi | Sn-58Bi | Sn-58Bi | Sn-58Bi | Sn-58Bi | Sn-57Bi-1Ag | Sn-57Bi-1Ag | Sn-57Bi-1Ag | Sn-57Bi-1Ag | Sn-57Bi-1Ag | Sn-57Bi-1Ag | - | Sn-58Bi |
| Alloy Composition Immediately Before Supplying Additional Supplying Composition 2 (mass%) | Sn-59.77Bi | Sn-59.54Bi | Sn-59.66Bi | Sn-59.58Bi | Sn-59.66Bi | Sn-59.71Bi | Sn-59.01Bi-1.05Ag | Sn-58.59Bi-1.02Ag | Sn-58.38Bi-1.03Ag | Sn-58.44Bi-1.03Ag | Sn-58.71Bi-1.04Ag | Sn-58.43Bi-1.05Ag | Sn-59.60Bi | Sn-59.62 Bi |
| Additional Supplying Composition 2 (Additionally Supplied Solder) (mass%) | Sn100 | Sn-10.01Bi | Sn-20.14Bi | **Sn-**30.16Bi | Sn-39.99Bi | Sn-50.10Bi | Sn100 | Sn-10.01Bi | Sn-20.14Bi | **Sn-**30.16Bi | Sn-39.99Bi-0.8Ag | Sn-50.10Bi-0.8Ag | Sn100 | Sn-58Bi |
| Additional Supplying Amount (Amount of Solder Drawn out of Solder Bath) (kg) | 12.44 | 13.06 | 17.64 | 22.56 | 1.04 | 2.11 | 14.31 | 13.75 | 15.16 | 21.39 | 1.50 | 3.02 | Amount until initial liquid level becomes the same as the liquid level after decreased by 5 mm (10.61 kg) | 210 |
| Bi Content After Addition of Additional Supplying Composition 2 (mass%) | 58.25 | 58.25 | 58.39 | 58.29 | 58.12 | 58.22 | 57.12 | 57.33 | 57.17 | 57.19 | 57.25 | 57.22 | 57.83 | 59.31 |
| Increased Amount of Bi Immediately Before Additional Supply (mass%) | 1.77 | 1.54 | 1.66 | 1.58 | 1.66 | 1.71 | 2.01 | 1.59 | 1.38 | 1.44 | 1.71 | 1.43 | 1.60 | 1.62 |
| Increase Rate of Bi Content Immediately Before Additional Supply (%) | 3.05 | 2.66 | 2.86 | 2.72 | 2.86 | 2.95 | 3.53 | 2.79 | 2.42 | 2.53 | 3.00 | 2.51 | 2.76 | 2.79 |
| (Bi Content after Additional Supply) - (Bi Content of Initial Input Composition) (mass%) | 0.25 | 0.25 | 0.39 | 0.29 | 0.12 | 0.22 | 0.12 | 0.33 | 0.17 | 0.19 | 0.25 | 0.22 | -0.17 | 1.31 |
| Ratio of Difference between Initial Input Composition and Bi Content after Additional Supply (%) | 0.43 | 0.43 | 0.67 | 0.50 | 0.21 | 0.38 | 0.21 | 0.57 | 0.29 | 0.33 | 0.43 | 0.38 | -0.29 | 2.26 |
| Ag Content in Solder Bath After Additional Supply (mass%) | - | - | - | - | - | - | 1.01 | 0.98 | 1.00 | 0.97 | 1.00 | 0.99 | - | - |
| Soldering Device | MTF-300 | MTF-300 | MTF-300 | MTF-300 | Flow Simulator | Flow Simulator | MTF-300 | MTF-300 | MTF-300 | MTF-300 | Flow Simulator | Flow Simulator | MTF-300 | MTF-300 |

As described above, in all the examples, it was found that the Bi content in the solder bath after supplying the solder of the Additional Supplying Composition 2 was adjusted to a composition close to the initial input composition. On the other hand, in Comparative Example 1, since the additionally supplied solder having the same composition as the initial input composition was supplied after deriving 210 kg, which is half the mass of the solder bath, it was not possible to adjust to the initial input composition.

## Claims

1. A solder supplying method comprising supplying an additionally supplied solder, which is a low-Bi solder alloy having a lower Bi content than a Bi-containing solder alloy, or Sn, to a solder bath into which the Bi-containing solder alloy has been introduced, thereby adjusting the Bi content in the solder bath to the Bi content of the Bi-containing solder alloy when it was initially introduced in the solder bath.

2. The solder supplying method according to claim 1,
wherein the Bi-containing solder alloy and the additionally supplied solder each contain at least one of Ge, P, In, Zn, Mn, Cr, Co, Fe, Si, Al, Ti, Ag, Cu, Ni, Sb, and a rare earth elements.

3. The solder supplying method according to claim 1 or 2,
wherein the Bi-containing solder alloy is an Sn-Bi solder alloy or an Sn-Bi-Ag solder alloy.

4. The solder supplying method according to claims 1 to 3,
wherein the Bi-containing solder alloy initially introduced into the solder bath is introduced at predetermined time intervals or a predetermined timing in a time period from introduction of the Bi-containing solder alloy into the solder bath first to immediately before supply of the additionally supplied solder.

5. The solder supplying method according to claims 1 to 4,
wherein the additionally supplied solder is supplied based on a Bi content constituting a solder alloy in the solder bath immediately before the additionally supplied solder is supplied.

6. The solder supplying method according to claim 5,
wherein the additionally supplied solder is supplied into the solder bath after a Bi-containing solder alloy having a mass substantially equal to a supplying amount of the additionally supplied solder is drawn out of the solder bath from the Bi-containing solder alloy in the solder bath.
